# EUROPEAN PATENT SPECIFICATION

(11) **EP 4 180 780 B1**
(45) Date of publication and mention of the grant of the patent: **25.09.2024**
(21) Application number: 22202480.4
(22) Date of filing: 19.10.2022
(51) Int. Cl.: G01J 3/28, G06V 10/143, G06V 10/774

(54) **METHOD AND SYSTEM FOR SPECTRUM MATCHING FOR HYPERSPECTRAL AND MULTISPECTRAL DATA**
VERFAHREN UND SYSTEM ZUR SPEKTRENANPASSUNG FÜR HYPERSPEKTRALE UND MULTISPEKTRALE DATEN
PROCÉDÉ ET SYSTÈME DE MISE EN CORRESPONDANCE DE SPECTRE POUR DES DONNÉES HYPERSPECTRALES ET MULTISPECTRALES

(30) Priority: 12.11.2021 IN 202121052028
(43) Date of publication of application: 17.05.2023
(73) Proprietor: Tata Consultancy Services Limited, 400021 Mumbai, Maharashtra (IN)
(72) Inventor: DESHPANDE, Shailesh Shankar, 411013 Pune, Maharashtra (IN); HARI BASKAR, Manish Kausik, 560095 Bangalore, Karnataka (IN); PURUSHOTHAMAN, Balamuralidhar, 560066 Bangalore, Karnataka (IN)
(74) Representative: Goddar, Heinz J.

(56) References cited:
- CN-A- 109 377 507
- KRUSE F.A. ET AL: "The spectral image processing system (SIPS)—interactive visualization and analysis of imaging spectrometer data", REMOTE SENSING OF ENVIRONMENT., vol. 44, no. 2-3, 1 May 1993 (1993-05-01), XX, pages 145 - 163, XP055804065, ISSN: 0034-4257, DOI: 10.1016/0034-4257(93)90013-N

## Description

### CROSS-REFERENCE TO RELATED APPLICATIONS AND PRIORITY

The present application claims priority to Indian application no. 202121052028, filed on November 12, 2021.

### TECHNICAL FIELD

The disclosure herein generally relates to the field of spectral matching and more particularly, to a method and system for spectrum matching for hyperspectral and multispectral data.

### BACKGROUND

In hyperspectral imaging, hyperspectral data is collected with a large number of narrow bands, as opposed to RGB data (which is collected with three broad bands) or multispectral data (which is collected with more than three broad bands). Because of the narrow band data collection in hyperspectral imaging (commonly less than or equal to ten nano meters), the detailed interaction between a material and the solar energy is available. This interaction is recorded as an amount of energy reflected by each wavelength/band (indicating reflectance recorded over a certain range). Hypothetically, reflection and absorption of the solar energy at each wavelength (over a wide wavelength range) by the given material is unique and hence the material is identified by such a unique signature. This is not available in RGB imaging and/or multispectral imaging because of the broad band data collection.

There are several remote sensing techniques for detecting a target material. One of the most common strategies is to record the signature of reference materials and create a library. The signature of the target material (material to be detected, whose signature is available from any source) is then matched with the references in the library. The match can be found for a specific diagnostic absorption or reflectance or for entire spectrum of the target material and reference material. If there are no prominent diagnostic absorptions or reflectance in the spectrum then the entire spectrum is matched. The entire spectrum match is used in hyperspectral image classification (segmentation) procedure. In this classification process a target image pixel is matched with the library for labelling the same. The target image pixel is labelled with the label of the reference material having closest match with the target image pixel. The procedure is repeated for every target image pixel in the target image for segmenting. The spectral matching is also used in deep learning classification as well. A match score between the target image and the reference material is used for measuring reconstruction loss or any other similar loss for optimizing weights of the deep learning network. The loss function corresponding to the above said losses is desired, in addition to loss because of labelling error, to generalize the deep learning model well. The matching is relevant in the other procedures as well wherein exclusive label is not required yet matching between two spectra is essential. For example, the process of clustering is performed using the match score (or similarity measure or distance measure) between two spectra. The pixels are grouped based on the similarity of the pixel, with the pixel (or some hypothetical pixel) representing cluster center.

There are many spectral matching methods such as cosine measure or spectral angle between two spectra, L1 norm corresponds to band wise difference, L2 norm corresponds to Euclidian distance in case the spectra are represented as a real-valued vector. If the spectra are converted to binary representation, then hamming distance is used. Most of these spectral matching methods consider geometric or statistical distances and each one has advantages and disadvantages. For example, if the two spectra are having similar shapes, cosine measure does not account for the amplitude difference in the spectra. For large statistically significant amplitude difference of the spectra, the cosine measure is same. This kind of measures considers the spectrum of the target material as an 'n' dimensional vector where 'n' equals number of bands. Furthermore, these distances are defined over spectra of equal lengths. There are situations wherein the spectra might not be of equal lengths. There might be different number of bands in the same wavelength range because of differences in spectral-resolution or situation demands matching between multispectral and hyperspectral signatures. For example, when a multispectral spectrum is to be matched with the one in the hyperspectral library. Kruse F.A. et al., "The spectral image processing system (SIPS)-interactive visualization and analysis of imaging spectrometer data", describes "The Center for the Study of Earth from Space (CSES) at the University of Colorado, Boulder, has developed a prototype interactive software system called the Spectral Image Processing System (SIPS) using IDL (the Interactive Data Language) on UNIX-based workstations. SIPS is designed to take advantage of the combination of high spectral resolution and spatial data presentation unique to imaging spectrometers. It streamlines analysis of these data by allowing scientists to rapidly interact with entire datasets. SIPS provides visualization tools for rapid exploratory analysis and numerical tools for quantitative modeling. The user interface is X-Windows-based, user friendly, and provides "point and click" operation. SIPS is being used for multidisciplinary research concentrating on use of physically based analysis methods to enhance scientific results from imaging spectrometer data. The objective of this continuing effort is to develop operational techniques for quantitative analysis of imaging spectrometer data and to make them available to the scientific community prior to the launch of imaging spectrometer satellite systems such as the Earth Observing System (EOS) High Resolution Imaging Spectrometer (HIRIS)" (Abstract). CN109377507A describes "The invention discloses a hyperspectral remote sensing image segmentation method based on a spectral curve spectral distance. Firstly, a neighborhood spectral curve spectral distance model of a target pixel is constructed. The Hilbert transform is used to obtain the odd-even filtering results by convolution operation, and the square root of the sum of squares of the odd-even filtering results is used as the local energy to construct the edge feature enhancement model. The edge feature enhancement model based on neighborhood spectral features is obtained by combining the two methods, which is used to obtain the edge feature enhancement results. The result of edge feature enhancement is input into watershed segmentation algorithm as gradient data, And the watershed segmentation algorithm is optimized to achieve high-precision segmentation of remote sensing images, which can effectively suppress the over-segmentation phenomenon of hyperspectral remote sensing images and solve the technical problems that weak edges and pseudo-edges in hyperspectral remote sensing images affect the segmentation results of remote sensing images" (Abstract).

### SUMMARY

Embodiments of the present disclosure present technological improvements as solutions to one or more of the above-mentioned technical problems recognized by the inventors in conventional systems.

The invention is defined by a method according to independent claim 1.

The invention is defined by a system according to independent claim 4.

In an embodiment, wherein the target spectrum and the reference spectrum are at least one of a hyperspectral spectrum or a multispectral spectrum.

In an embodiment, wherein the transformation cost corresponds to one or more of (i) translation of a primitive in x and y dimensions (ii) deletion of the primitive and (iii) insertion of the primitive.

The invention is defined by a storage medium as defined in claim 7.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary block diagram of a system for spectrum matching for hyperspectral and multispectral data, in accordance with some embodiments of the present disclosure
FIG. 2 is an exemplary flow diagram illustrating a method for spectrum matching for hyperspectral and multispectral data according to some embodiments of the present disclosure.
FIG. 3A depicts a graphical representation of an example of spectral signatures in line graph according to some embodiments of the present disclosure.
FIG. 3B depicts a graphical representation of an example of spectral signatures in bar chart according to some embodiments of the present disclosure.
FIG. 4 depicts a graphical representation of an example showing transformation steps for spectrum matching according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The embodiments herein provide a method and system for spectrum matching for hyperspectral and multispectral data. The disclosed method explains spectrum matching as a measurement of transformation required for converting a target spectrum to a reference spectrum in a library or vice versa. Each primitive in a set of primitives of the target spectrum is transformed to the primitive of the reference spectrum. Each transformation has a cost associated with it. The total cost of transformation is taken as a distance between the two spectra. The disclosed method performs spectral matching based on a distance between the two spectra which reflect the shape difference between the two spectra in two-dimensional space (wavelength and reflectance).

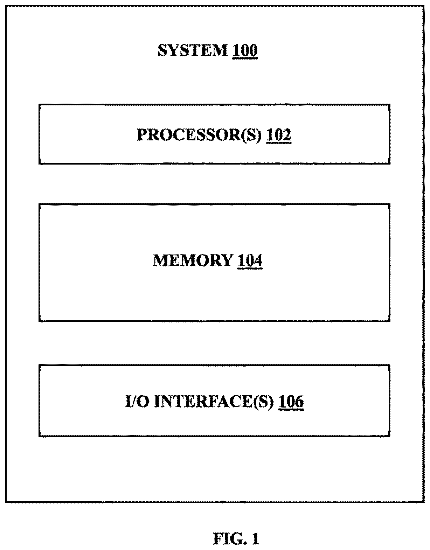

Referring now to the drawings, and more particularly to FIG. 1 through FIG. 4, where similar reference characters denote corresponding features consistently throughout the figures, there are shown preferred embodiments and these embodiments are described in the context of the following exemplary system and/or method.

FIG. 1 illustrates a system 100 for spectrum matching for hyperspectral and multispectral data. In an embodiment, the system 100 includes one or more processors 102, communication interface device(s) or input/output (I/O) interface(s) 106, and one or more data storage devices or memory 104 operatively coupled to the one or more processors 102. The one or more processors 102 that are hardware processors can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In the context of the present disclosure, the expressions 'processors' and `hardware processors' may be used interchangeably. In an embodiment, the system 100 can be implemented in a variety of computing systems, such as laptop computers, notebooks, hand-held devices, workstations, mainframe computers, servers, a network cloud and the like.

The I/O interface (s) 106 may include a variety of software and hardware interfaces, for example, a web interface, a graphical user interface, and the like and can facilitate multiple communications within a wide variety of networks and protocol types, including wired networks, for example, LAN, cable, etc., and wireless networks, such as WLAN, cellular, or satellite. In an embodiment, the I/O interface(s) can include one or more ports for connecting a number of devices to one another or to another server.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

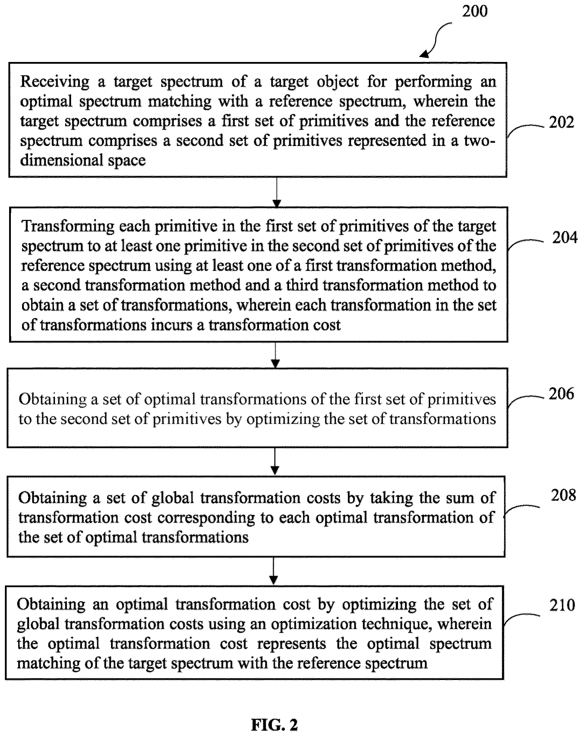

FIG. 2 is an exemplary flow diagram illustrating a method for spectrum matching for hyperspectral and multispectral data according to some embodiments of the present disclosure. The steps of the method 200 of the present disclosure will now be explained with reference to the components of the system 100.

In an embodiment of the present disclosure, the one or more processors 102 are configured to receive at step 202, a target spectrum of a target object for performing an optimal spectrum matching with a reference spectrum, wherein the target spectrum comprises a first set of primitives and the reference spectrum comprises a second set of primitives represented in a two-dimensional space. The x-axis and y-axis in two-dimensional space correspond to wavelength and reflectance respectively. In an embodiment, the target spectrum can be hyperspectral or multispectral spectrum and the reference spectrum is hyperspectral spectrum, however in some cases the reference spectrum can be multispectral spectrum also. The target spectrum can be received as a single spectrum or as a collection of spectra (collection of spectra in image or non-image format). The set of primitives of the target spectrum and reference spectrum can be curves or a set of points.

In an embodiment of the present disclosure, the one or more processors 102 are configured to transform at step 204, each primitive in the first set of primitives of the target spectrum to at least one primitive in the second set of primitives of the reference spectrum using at least one of a first transformation method, a second transformation method and a third transformation method to obtain a set of transformations, wherein each transformation in the set of transformations incurs a transformation cost. In an embodiment, the transformation method is chosen based on sensitivity measure of the three transformation methods. In general, sensitivity is a measure of changes in the distance per unit perturbations in an original spectrum. White noise is added to the original spectra and then a match is measured between the original and changed spectra. This distance indicates the increase in the distance because of the disturbances added in the original spectrum (as the distance with self is zero). Further, the distance is divided by the total perturbations added. Higher the sensitivity better is the method for calculating match score. Table 1 provides a comparative assessment of sensitivity of various prior distance measures with the disclosed methods for hyperspectral signatures.

**Table 1**

| **Method** | **Sensitivity** |
|---|---|
| Euclidean | 18.86 |
| Cosine | 0.74 |
| Edit distance method | 280.63 |
| Hungarian based method | 287.80 |
| Piece-wise angle method | 255.04 |
| Frechet distance | 18.86 |
| L 1-Norm | 287.80 |
| Hamming distance | 1430.0 |

In another embodiment, the method for transformation for spectral matching can also be selected based on other attributes as well such as computational complexity of the method, domain knowledge (encoding the expert knowledge in form of rules and using rule based or case based system for selecting the method), meta empirical or analytical method or ensemble methods (voting or taking weighted summation of distances from all methods and weightage assigned to outcome of each method wherein weightage is assigned by experts or calculated automatically by internal properties of the method). The first transformation method corresponds to edit distance method, the second transformation method corresponds to Hungarian method and the third transformation method corresponds to piece-wise angle and length distance method. The explanation and algorithm for the first, second and third transformation methods are provided further after step 206. The steps of the algorithm for first, second and third transformation methods provided further includes the step 206 of the method 200.

In an embodiment of the present disclosure, the one or more processors 102 are configured to obtain at step 206, a set of optimal transformations of the first set of primitives to the second set of primitives by optimizing the set of transformations.

According to an embodiment of the disclosure, the steps for the edit distance method are provided below:
1. Create a first matrix for pairs from target spectrum primitives and reference spectrum primitives.
2. Starting from left to right and starting at first primitive of the target spectrum calculate the three distances with the mapped/paired primitive on reference spectrum. The three distance operations are insertion, deletion and substitution. If the target spectrum and the reference spectrum are of equal length, insertion and deletion operation is not needed. Minimum of the three distances is chosen for finding the total transformation cost and cost associated with the operation is added.
3. Repeat the operation for all the paired primitives and sum up the cost for selected operations for each paired transformation to obtain the total transformation cost.

According to an embodiment of the disclosure, the steps for the Hungarian based method are provided below:
1. Create a second matrix of pairs of the primitives from the target spectrum and the reference spectrum.
2. In this case the primitive from target spectrum can be mapped or transformed to any other primitive in the reference spectrum. A cost is associate for each such transformation of paired primitives.
3. Calculate the cost of transformation for each pair. The cost for a transformation for a pair is: weighted *x* and *y* scalar difference (*Δx* and *Δy*). By end of this step a matrix with all possible transformation and their cost would be ready. Thus, for example, assuming equal length spectrums of *n* bands there would be *n×n* pairs of assignments.

According to an embodiment of the disclosure, the steps for the piece-wise angle and length distance method are given below:
1. Calculate an angular difference and a length difference between corresponding arcs of the target spectrum and the reference spectrum to generate an arc score wherein the target spectrum and the reference spectrum are represented by two dimensions wavelength and reflectance values.
2. Repeat the step 1 for every corresponding arc in the target and the reference spectrum.
3. Add the arc scores corresponding to all arcs to get the final matching score.

In an embodiment another variant for the piece-wise angle and length method is provided as follows. The *n* dimensional vector can be viewed from *n* - 1 two dimensional directions, three dimensional directions and so on. For example, a point in XYZ dimensions can be orthographically projected to XY, YZ, or XZ plane or can be viewed from the direction which is perpendicular to the plane. Such a pair of dimensions in sequence can represent vector in subspace. The cosine for such a projected vector between the reference and the target spectrum is calculated for each two dimensions in sequence and then added up to give the total distance. For example, if a spectrum A has 8 bands named as band *a*1, *a*2, *a*3, *a*4 and so on. And spectrum B has 8 bands *b1, b2, b3, b4* and so on. Then vector in subspace 1-2 for target and reference is considered. Its cosine is calculated that is cosine between vector (*a*1, *b*1) and vector (*b*1, *b2*)*.* Same procedure is repeated for all the ordered pairs such as (*a*2, *a*3) and (*b2, b*2) and so on and the cosine in for each such pair is aggregated to give the total similarity between the two spectra.

The pseudo code for the edit distance method is provided below

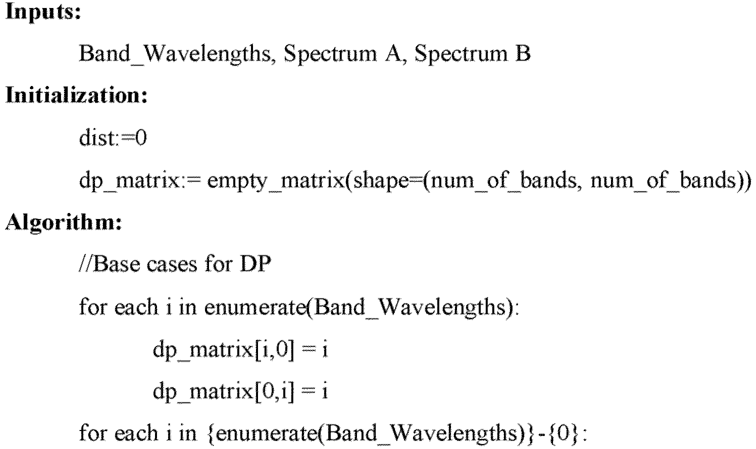

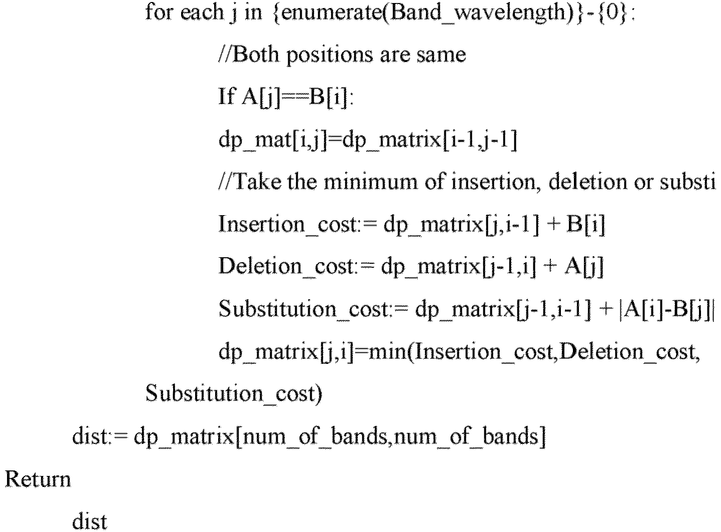

The pseudo code for the Hungarian method is provided below

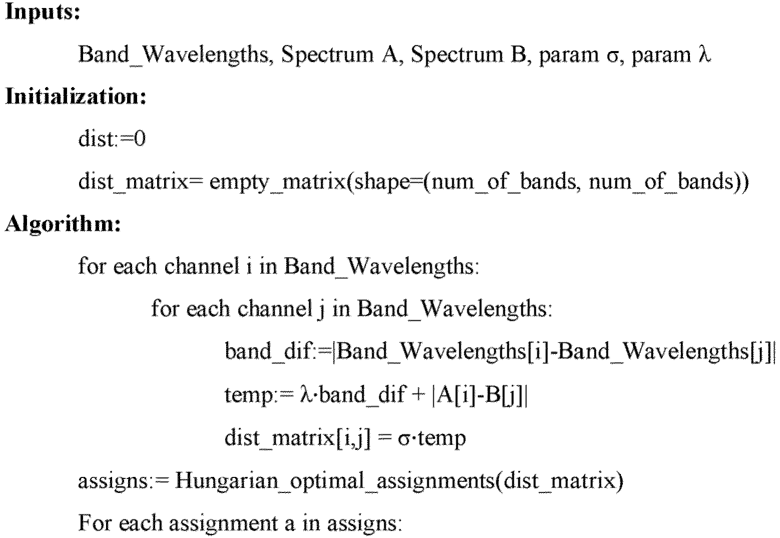

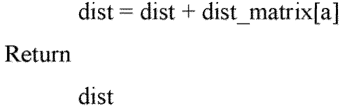

The pseudo code for the piece-wise angle and length method is provided below

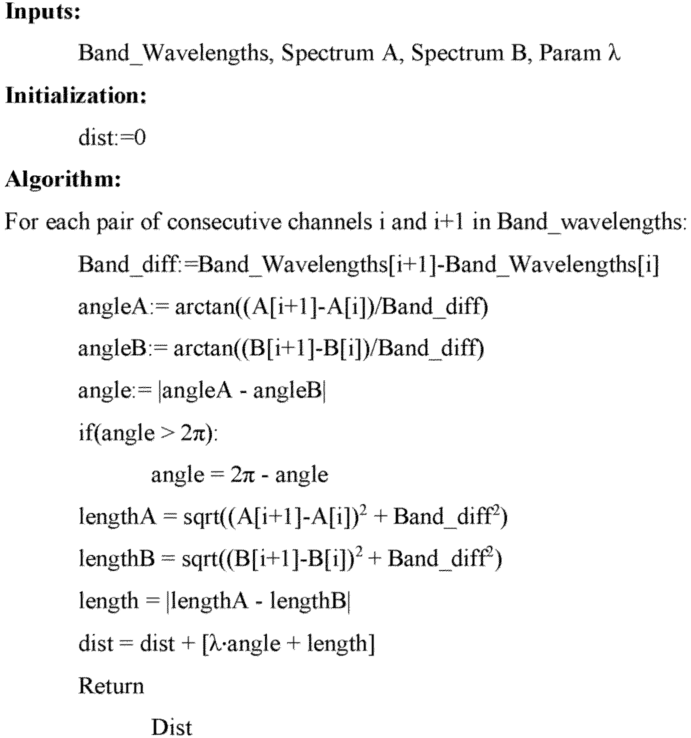

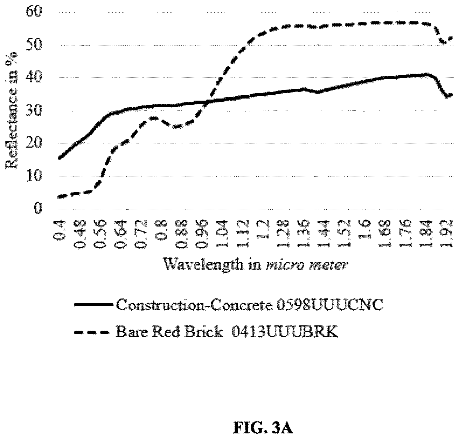

FIG. 3A depicts a graphical representation of an example of spectral signatures in line graph according to some embodiments of the present disclosure. The figure shows the line graph of the spectral signatures of construction concrete and red brick.

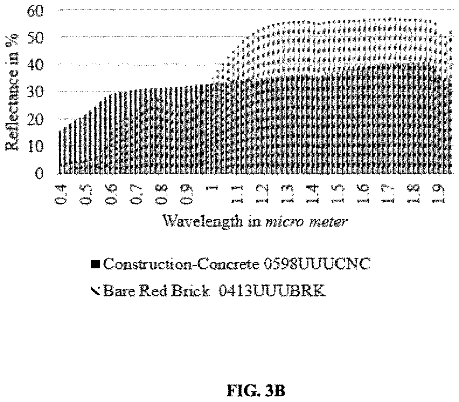

FIG. 3B depicts a graphical representation of an example of spectral signatures in bar chart according to some embodiments of the present disclosure. The figure shows a bar chart view of the spectral signatures of construction concrete and red brick.

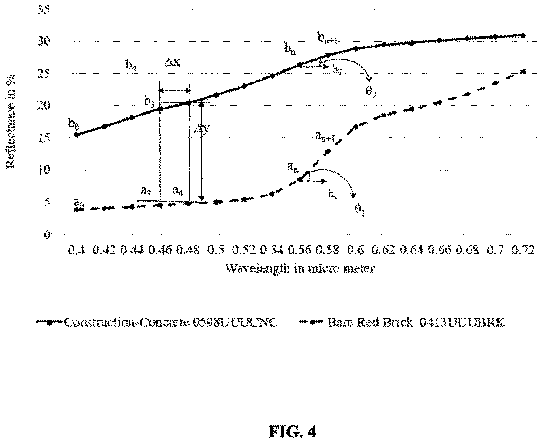

FIG. 4 depicts a graphical representation of an example showing transformation steps for spectrum matching according to some embodiments of the present disclosure. As an example, the spectral signatures for "Construction concrete" and "Bare brick red" are shown in the figure. They are represented as arc of points {a₀ to aₙ} and {b₀ to bₙ}. The transformation of point a₀ to its corresponding point on the second arc, which could be any point in {b₀ to bₙ} and incurs a cost. For example, the cost of translation in x and y direction are given as Δx and Δy. In case the spectra do not have same number of bands then inserting and deleting the point or bar is considered. For the piece wise angle and length distance, the Δθ = {θ₁ and θ₂}, and ΔL = len(arc(aₙ, aₙ₊₁))-len(arc(bₙ, bₙ₊₁)) is calculated and then added, that is Δθ+ΔL. Total distance is sum of this for each corresponding arc from two spectra.

In an embodiment of the present disclosure, the one or more processors 102 are configured to obtain at step 208, a set of global transformation costs by taking the sum of transformation cost corresponding to each optimal transformation of the set of optimal transformations. The set of global transformation cost is the sum of (costs for) optimal pairs of primitives of the target spectrum and the reference spectrum. The best pair of transformation for each primitive cannot be decided using the local minima.

In an embodiment of the present disclosure, the one or more processors 102 are configured to obtain at step 210, an optimal transformation cost by optimizing the set of global transformation costs using an optimization technique, wherein the optimal transformation cost represents the optimal spectrum matching of the target spectrum with the reference spectrum. Optimization is performed using any suitable optimization method such as dynamic programming method or the Hungarian method for calculating the best matching score between the target spectrum and the reference spectrum. Higher the matching score better is the discrimination between the two spectra. The score can be inversed to convert it to a similarity score where high score indicates a good match.

EXPERIMENTAL RESULTS: The performance of the disclosed method on spectral databases available in public domain are analyzed. Publicly available spectral libraries such as ASTER, splib07, and splib Tarnag are used for analyzing the performance of the disclosed method. Spectra of most representative materials in each Visible Spectroscopy (VIS) categories were selected. For example, three number of samples from vegetation, impervious surfaces (such as concrete, asphalt etc.), and soil are selected. The code of the materials as per the library nomenclature is provided in the table for easy reference. The original spectral spectra were resampled to a common wavelength range by a simple interpolation. The new range was different for spib07 and ASTER library. It is <from-to-interval> for splib07 and <from-to-interval> for ASTER. This is not essential as the disclosed method do not require two vectors of same length for distance calculation. However, it is essential for comparative assent with the other methods. Table 2, Table 3, and Table 4 shows a comparison of distances of the edit distance based method, the Hungarian based method and the piece-wise angular distance method respectively for various spectral signatures.

**Table 2**

| **Edit distance based method** | | | |
|---|---|---|---|
| | **Construction-Concrete 0598UUUCNC** | **Light yellowish brown clay - 89p1763** | **Ficus Platypoda - JPL194** |
| **Asphalt-Shingle 0490UUUASP** | 784.95 | 1954.552 | 1234.993 |
| **Bare Red Brick 0413UUUBRK** | 987.46 | 720.2227 | 978.323 |
| **Black Tar Paper 0522UUUTAR** | 323.67 | 323.67 | 323.67 |
| **Construction-Asphalt 0674UUUASP** | 715.55 | 715.55 | 689.903 |
| **Construction-Concrete 0598UUUCNC** | 0 | 1317.757 | 1105.231 |
| **Galvanised-Steel-Metal 0525UUUSTLa** | 948.03 | 949.83 | 714.457 |
| **Olive-Green-Paint 0407UUUPNT** | 2039.118 | 1045.346 | 1257.283 |

**Table 3**

| **Hungarian based method** | | | |
|---|---|---|---|
| | **Construction-Concrete 0598UUUCNC** | **Light yellowish brown clay - 89p1763** | **Ficus Platypoda - JPL194** |
| **Asphalt-Shingle 0490UUUASP** | 679.03 | 1981.145 | 1106.259 |
| **Bare Red Brick 0413UUUBRK** | 1072.71 | 834.2591 | 639.673 |
| **Black Tar Paper 0522UUUTAR** | 2360.2 | 3675.882 | 2346.437 |
| **Construction-Asphalt 0674UUUASP** | 1968.32 | 3284.002 | 1954.557 |
| **Construction-Concrete 0598UUUCNC** | 0 | 1317.757 | 952.419 |
| **Galvanised-Steel-Metal 0525UUUSTLa** | 1734.04 | 3049.722 | 1725.077 |
| **Olive-Green-Paint 0407UUUPNT** | 2039.118 | 1141.948 | 1637.299 |

**Table 4**

| **Piece-wise angular distance method** | | | |
|---|---|---|---|
| | **Construction-Concrete 0598UUUCNC** | **Light yellowish brown clay - 89p1763** | **Ficus Platypoda - JPL194** |
| **Asphalt-Shingle 0490UUUASP** | 905.4136 | 2032.025 | 1331.455 |
| **Bare Red Brick 0413UUUBRK** | 1074.922 | 920.2697 | 1527.821 |
| **Black Tar Paper 0522UUUTAR** | 2387.787 | 3664.107 | 2302.735 |
| **Construction-Asphalt 0674UUUASP** | 2006.092 | 3268.659 | 1915.444 |
| **Construction-Concrete 0598UUUCNC** | 0 | 1329.037 | 1212.507 |
| **Galvanised-Steel-Metal 0525UUUSTLa** | 1788.041 | 3022.219 | 1755.362 |
| **Olive-Green-Paint 0407UUUPNT** | 2092.148 | 1253.861 | 1779.658 |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only. The invention is defined by the following claims.

## Claims

1. A processor implemented method (200) comprising:
receiving, via one or more hardware processors (102), a target spectrum of a target object for performing an optimal spectrum matching with a reference spectrum, wherein the target spectrum comprises a first set of primitives and the reference spectrum comprises a second set of primitives represented in a two-dimensional space (202), wherein the first set of primitives and the second set of primitives comprise one of curves and a set of points in the two-dimensional space, and wherein x-axis corresponds to wavelength and y-axis corresponds to reflectance in the two-dimensional space;
transforming, via the one or more hardware processors (102), each primitive in the first set of primitives of the target spectrum to at least one primitive in the second set of primitives of the reference spectrum using at least one of a first transformation method, a second transformation method and a third transformation method to obtain a set of transformations, wherein each transformation in the set of transformations incurs a transformation cost (204),
wherein the first transformation method corresponds to an edit distance based method based on a distance measured between the first set of primitives and the second set of primitives, wherein steps for the edit distance method comprises:
creating a first matrix of pairs of primitives from the target spectrum and the reference spectrum,
calculating at least three distances with a mapped or a paired primitive on the reference spectrum starting from left to right and starting at a first primitive of the target spectrum, wherein one of insertion, deletion, and substitution operations are selected for calculating the at least three distances, and
repeating the creating and calculating steps for all paired primitives and sum up cost for the selected operations for each paired transformation to obtain a total transformation cost;
wherein the second transformation method corresponds to a Hungarian based method based on x and y dimension distance measure between the first set of primitives and the second set of primitives, wherein steps for the Hungarian based method comprises:
creating a second matrix of pairs of primitives from the target spectrum and the reference spectrum,
mapping or transforming a primitive from the target spectrum to any other primitive in the reference spectrum, wherein a cost is associated for each transformation of paired primitives, and
calculating a cost of transformation for each pair of primitives, wherein the cost for a transformation for a pair is: weighted x and y scalar difference; and
wherein the third transformation method corresponds to a piece-wise angular distance method based on angular difference and length difference between the first set of primitives and the second set of primitives, wherein steps for the piece-wise angular distance method comprises:
calculating an angular difference and a length difference between corresponding arcs of the target spectrum and the reference spectrum to generate an arc score, wherein the target spectrum and the reference spectrum are represented by two dimensions wavelength and reflectance values,
repeating the calculation for every corresponding arc in the target spectrum and the reference spectrum, and
adding the arc scores corresponding to all arcs to obtain a final matching score;
obtaining, via the one or more hardware processors (102), a set of optimal transformations of the first set of primitives to the second set of primitives by optimizing the set of transformations (206);
obtaining, via the one or more hardware processors (102), a set of global transformation costs by taking the sum of transformation cost corresponding to each optimal transformation of the set of optimal transformations (208); and
obtaining, via the one or more hardware processors (102), an optimal transformation cost by optimizing the set of global transformation costs using an optimization technique, wherein the optimal transformation cost represents the optimal spectrum matching of the target spectrum with the reference spectrum (210).

2. The method (200) of claim 1, wherein the target spectrum and the reference spectrum are at least one of a hyperspectral spectrum or a multispectral spectrum.

3. The method (200) of claim 1, wherein the transformation cost corresponds to one or more of (i) translation of a primitive in x and y dimensions (ii) deletion of the primitive and (iii) insertion of the primitive.

4. A system (100), comprising:
a memory (104) storing instructions;
one or more communication interfaces (106); and
one or more hardware processors (102) coupled to the memory (104) via the one or more communication interfaces (106), wherein the one or more hardware processors (102) are configured by the instructions to:
receive a target spectrum of a target object for performing an optimal spectrum matching with a reference spectrum, wherein the target spectrum comprises a first set of primitives and the reference spectrum comprises a second set of primitives represented in a two-dimensional space, **characterized by**, wherein the first set of primitives and the second set of primitives comprise one of curves and a set of points in the two-dimensional space, and wherein x-axis corresponds to wavelength and y-axis corresponds to reflectance in the two-dimensional space;
transform each primitive in the first set of primitives of the target spectrum to at least one primitive in the second set of primitives of the reference spectrum using at least one of a first transformation method, a second transformation method and a third transformation method to obtain a set of transformations, wherein each transformation in the set of transformations incurs a transformation cost,
wherein the first transformation method corresponds to an edit distance based method based on a distance measured between the first set of primitives and the second set of primitives, wherein steps for the edit distance method comprises:
creating a first matrix of pairs of primitives from the target spectrum and the reference spectrum,
calculating at least three distances with a mapped or a paired primitive on the reference spectrum starting from left to right and starting at a first primitive of the target spectrum, wherein one of insertion, deletion, and substitution operations are selected for calculating the at least three distances, and
repeating the creating and calculating steps for all paired primitives and sum up cost for the selected operations for each paired transformation to obtain a total transformation cost;
wherein the second transformation method corresponds to a Hungarian based method based on x and y dimension distance measure between the first set of primitives and the second set of primitives, wherein steps for the Hungarian based method comprises:
creating a second matrix of pairs of primitives from the target spectrum and the reference spectrum,
mapping or transforming a primitive from the target spectrum to any other primitive in the reference spectrum, wherein a cost is associated for each transformation of paired primitives, and
calculating a cost of transformation for each pair of primitives, wherein the cost for a transformation for a pair is: weighted x and y scalar difference; and
wherein the third transformation method corresponds to a piece-wise angular distance method based on angular difference and length difference between the first set of primitives and the second set of primitives, wherein steps for the piece-wise angular distance method comprises:
calculating an angular difference and a length difference between corresponding arcs of the target spectrum and the reference spectrum to generate an arc score, wherein the target spectrum and the reference spectrum are represented by two dimensions wavelength and reflectance values,
repeating the calculation for every corresponding arc in the target spectrum and the reference spectrum, and
adding the arc scores corresponding to all arcs to obtain a final matching score;
obtain a set of optimal transformations of the first set of primitives to the second set of primitives by optimizing the set of transformations;
obtain a set of global transformation costs by taking the sum of transformation cost corresponding to each optimal transformation of the set of optimal transformations; and
obtain an optimal transformation cost by optimizing the set of global transformation costs using an optimization technique, wherein the optimal transformation cost represents the optimal spectrum matching of the target spectrum with the reference spectrum.

5. The system (100) of claim 4, wherein the target spectrum and the reference spectrum are at least one of a hyperspectral spectrum or a multispectral spectrum.

6. The system (100) of claim 4, wherein the transformation cost corresponds to one or more of (i) translation of a primitive in x and y dimensions (ii) deletion of the primitive and (iii) insertion of the primitive.

7. One or more non-transitory machine-readable information storage mediums (104) comprising one or more instructions which when executed by one or more hardware processors (102) cause the system (100) according to claim 4 to carry out the method (200) of claims 1-3.

## Patentansprüche

1. Prozessorimplementiertes Verfahren (200), umfassend:
Empfangen, über einen oder mehrere Hardwareprozessoren (102), eines Zielspektrums eines Zielobjekts zum Durchführen einer optimalen Spektrumsanpassung mit einem Referenzspektrum, wobei das Zielspektrum einen ersten Satz von Primitiven umfasst und das Referenzspektrum einen zweiten Satz von Primitiven umfasst, die in einem zweidimensionalen Raum (202) dargestellt sind, wobei der erste Satz von Primitiven und der zweite Satz von Primitiven eine von Kurven und einem Satz von Punkten in dem zweidimensionalen Raum umfassen, und wobei die x-Achse der Wellenlänge entspricht und die y-Achse der Reflexion in dem zweidimensionalen Raum entspricht;
Transformieren, über den einen oder die mehreren Hardwareprozessoren (102), jedes Primitivs in dem ersten Satz von Primitiven des Zielspektrums in mindestens ein Primitiv in dem zweiten Satz von Primitiven des Referenzspektrums unter Verwendung mindestens eines von einem ersten Transformationsverfahren, einem zweiten Transformationsverfahren und einem dritten Transformationsverfahren, um einen Satz von Transformationen zu erhalten, wobei jede Transformation in dem Satz von Transformationen Transformationskosten (204) verursacht,
wobei das erste Transformationsverfahren einem Editierdistanzbasierten Verfahren basierend auf einer Distanz entspricht, die zwischen dem ersten Satz von Primitiven und dem zweiten Satz von Primitiven gemessen wird, wobei Schritte für das Editierdistanzverfahren Folgendes umfassen:
Erzeugen einer ersten Matrix von Paaren von Primitiven aus dem Zielspektrum und dem Referenzspektrum,
Berechnen von mindestens drei Distanzen mit einem abgebildeten oder einem gepaarten Primitiv auf dem Referenzspektrum, beginnend von links nach rechts und beginnend bei einem ersten Primitiv des Zielspektrums, wobei eine von Einfüge-, Lösch- und Substitutionsoperationen zum Berechnen der mindestens drei Distanzen ausgewählt wird, und
Wiederholen der Erzeugungs- und Berechnungsschritte für alle gepaarten Primitiven und Summieren der Kosten für die ausgewählten Operationen für jede gepaarte Transformation, um Gesamttransformationskosten zu erhalten;
wobei das zweite Transformationsverfahren einem ungarischbasierten Verfahren basierend auf einem x- und y-dimensionalen Distanzmaß zwischen dem ersten Satz von Primitiven und dem zweiten Satz von Primitiven entspricht, wobei Schritte für das ungarischbasierte Verfahren Folgendes umfassen:
Erzeugen einer zweiten Matrix von Paaren von Primitiven aus dem Zielspektrum und dem Referenzspektrum,
Abbilden oder Transformieren eines Primitivs aus dem Zielspektrum auf ein beliebiges anderes Primitiv in dem Referenzspektrum, wobei Kosten für jede Transformation von gepaarten Primitiven assoziiert sind, und
Berechnen von Transformationskosten für jedes Paar von Primitiven, wobei die Kosten für eine Transformation für ein Paar Folgendes sind: gewichtete x- und y-Skalardifferenz; und
wobei das dritte Transformationsverfahren einem stückweisen Winkeldistanzverfahren basierend auf Winkeldifferenz und Längendifferenz zwischen dem ersten Satz von Primitiven und dem zweiten Satz von Primitiven entspricht, wobei Schritte für das stückweise Winkeldistanzverfahren Folgendes umfassen:
Berechnen einer Winkeldifferenz und einer Längendifferenz zwischen entsprechenden Bögen des Zielspektrums und des Referenzspektrums, um eine Bogenbewertung zu erzeugen, wobei das Zielspektrum und das Referenzspektrum durch zweidimensionale Wellenlängen- und Reflexionswerte dargestellt sind,
Wiederholen der Berechnung für jeden entsprechenden Bogen in dem Zielspektrum und dem Referenzspektrum, und
Addieren der Bogenbewertungen, die allen Bögen entsprechen, um eine endgültige Ubereinstimmungsbewertung zu erhalten;
Erhalten, über den einen oder die mehreren Hardwareprozessoren (102), eines Satzes von optimalen Transformationen des ersten Satzes von Primitiven zu dem zweiten Satz von Primitiven durch Optimieren des Satzes von Transformationen (206);
Erhalten, über den einen oder die mehreren Hardwareprozessoren (102), eines Satzes von globalen Transformationskosten durch Nehmen der Summe von Transformationskosten, die jeder optimalen Transformation des Satzes von optimalen Transformationen entsprechen (208); und
Erhalten, über den einen oder die mehreren Hardwareprozessoren (102), von optimalen Transformationskosten durch Optimieren des Satzes von globalen Transformationskosten unter Verwendung einer Optimierungstechnik, wobei die optimalen Transformationskosten die optimale Spektrumsanpassung des Zielspektrums mit dem Referenzspektrum darstellen (210).

2. Verfahren (200) nach Anspruch 1, wobei das Zielspektrum und das Referenzspektrum mindestens eines von einem hyperspektralen Spektrum oder einem multispektralen Spektrum sind.

3. Verfahren (200) nach Anspruch 1, wobei die Transformationskosten einem oder mehreren von (i) Translation eines Primitivs in x- und y-Dimensionen, (ii) Löschung des Primitivs und (iii) Einfügung des Primitivs entsprechen.

4. System (100), umfassend:
einen Speicher (104), der Anweisungen speichert;
eine oder mehrere Kommunikationsschnittstellen (106); und
einen oder mehrere Hardwareprozessoren (102), die mit dem Speicher (104) über die eine oder die mehreren Kommunikationsschnittstellen (106) gekoppelt sind, wobei der eine oder die mehreren Hardwareprozessoren (102) durch die Anweisungen konfiguriert sind zum:
Empfangen eines Zielspektrums eines Zielobjekts zum Durchführen einer optimalen Spektrumsanpassung mit einem Referenzspektrum, wobei das Zielspektrum einen ersten Satz von Primitiven umfasst und das Referenzspektrum einen zweiten Satz von Primitiven umfasst, die in einem zweidimensionalen Raum dargestellt sind, **dadurch gekennzeichnet, dass** der erste Satz von Primitiven und der zweite Satz von Primitiven eine von Kurven und einem Satz von Punkten in dem zweidimensionalen Raum umfassen, und wobei die x-Achse der Wellenlänge entspricht und die y-Achse der Reflexion in dem zweidimensionalen Raum entspricht;
Transformieren jedes Primitivs in dem ersten Satz von Primitiven des Zielspektrums in mindestens ein Primitiv in dem zweiten Satz von Primitiven des Referenzspektrums unter Verwendung mindestens eines von einem ersten Transformationsverfahren, einem zweiten Transformationsverfahren und einem dritten Transformationsverfahren, um einen Satz von Transformationen zu erhalten, wobei jede Transformation in dem Satz von Transformationen Transformationskosten verursacht,
wobei das erste Transformationsverfahren einem Editierdistanzbasierten Verfahren basierend auf einer Distanz entspricht, die zwischen dem ersten Satz von Primitiven und dem zweiten Satz von Primitiven gemessen wird, wobei Schritte für das Editierdistanzverfahren Folgendes umfassen:
Erzeugen einer ersten Matrix von Paaren von Primitiven aus dem Zielspektrum und dem Referenzspektrum,
Berechnen von mindestens drei Distanzen mit einem abgebildeten oder einem gepaarten Primitiv auf dem Referenzspektrum, beginnend von links nach rechts und beginnend bei einem ersten Primitiv des Zielspektrums, wobei eine von Einfüge-, Lösch- und Substitutionsoperationen zum Berechnen der mindestens drei Distanzen ausgewählt wird, und
Wiederholen der Erzeugungs- und Berechnungsschritte für alle gepaarten Primitiven und Summieren der Kosten für die ausgewählten Operationen für jede gepaarte Transformation, um Gesamttransformationskosten zu erhalten;
wobei das zweite Transformationsverfahren einem ungarischbasierten Verfahren basierend auf einem x- und y-dimensionalen Distanzmaß zwischen dem ersten Satz von Primitiven und dem zweiten Satz von Primitiven entspricht, wobei Schritte für das ungarischbasierte Verfahren Folgendes umfassen:
Erzeugen einer zweiten Matrix von Paaren von Primitiven aus dem Zielspektrum und dem Referenzspektrum,
Abbilden oder Transformieren eines Primitivs aus dem Zielspektrum auf ein beliebiges anderes Primitiv in dem Referenzspektrum, wobei Kosten für jede Transformation von gepaarten Primitiven assoziiert sind, und
Berechnen von Transformationskosten für jedes Paar von Primitiven, wobei die Kosten für eine Transformation für ein Paar Folgendes sind: gewichtete x- und y-Skalardifferenz; und
wobei das dritte Transformationsverfahren einem stückweisen Winkeldistanzverfahren basierend auf Winkeldifferenz und Längendifferenz zwischen dem ersten Satz von Primitiven und dem zweiten Satz von Primitiven entspricht, wobei Schritte für das stückweise Winkeldistanzverfahren Folgendes umfassen:
Berechnen einer Winkeldifferenz und einer Längendifferenz zwischen entsprechenden Bögen des Zielspektrums und des Referenzspektrums, um eine Bogenbewertung zu erzeugen, wobei das Zielspektrum und das Referenzspektrum durch zweidimensionale Wellenlängen- und Reflexionswerte dargestellt sind,
Wiederholen der Berechnung für jeden entsprechenden Bogen in dem Zielspektrum und dem Referenzspektrum, und
Addieren der Bogenbewertungen, die allen Bögen entsprechen, um eine endgültige Übereinstimmungsbewertung zu erhalten;
Erhalten eines Satzes von optimalen Transformationen des ersten Satzes von Primitiven zu dem zweiten Satz von Primitiven durch Optimieren des Satzes von Transformationen;
Erhalten eines Satzes von globalen Transformationskosten durch Nehmen der Summe von Transformationskosten, die jeder optimalen Transformation des Satzes von optimalen Transformationen entsprechen; und
Erhalten von optimalen Transformationskosten durch Optimieren des Satzes von globalen Transformationskosten unter Verwendung einer Optimierungstechnik, wobei die optimalen Transformationskosten die optimale Spektrumsanpassung des Zielspektrums mit dem Referenzspektrum darstellen.

5. System (100) nach Anspruch 4, wobei das Zielspektrum und das Referenzspektrum mindestens eines von einem hyperspektralen Spektrum oder einem multispektralen Spektrum sind.

6. System (100) nach Anspruch 4, wobei die Transformationskosten einem oder mehreren von (i) Translation eines Primitivs in x- und y-Dimensionen, (ii) Löschung des Primitivs und (iii) Einfügung des Primitivs entsprechen.

7. Ein oder mehrere nichtflüchtige maschinenlesbare Informationsspeichermedien (104), umfassend eine oder mehrere Anweisungen, die, wenn sie von einem oder mehreren Hardwareprozessoren (102) ausgeführt werden, das System (100) nach Anspruch 4 veranlassen, das Verfahren (200) nach den Ansprüchen 1-3 auszuführen.

## Revendications

1. Procédé mis en oeuvre par processeur (200) comprenant :
la réception, via un ou plusieurs processeurs matériels (102), d'un spectre cible d'un objet cible pour effectuer un mappage de spectre optimal avec un spectre de référence, le spectre cible comprenant un premier ensemble de primitives et le spectre de référence comprenant un deuxième ensemble de primitives représentées dans un espace bidimensionnel (202),
dans lequel le premier ensemble de primitives et le deuxième ensemble de primitives comprennent l'une parmi des courbes et un ensemble de points dans l'espace bidimensionnel, et l'axe x correspondant à la longueur d'onde et l'axe y correspondant à la réflectance dans l'espace bidimensionnel ;
la transformation, via les un ou plusieurs processeurs matériels (102), chaque primitive dans le premier ensemble de primitives du spectre cible en au moins une primitive dans le deuxième ensemble de primitives du spectre de référence en utilisant au moins un premier procédé de transformation, un deuxième procédé de transformation et un troisième procédé de transformation pour obtenir un ensemble de transformations, chaque transformation de l'ensemble de transformations entraînant un coût de transformation (204),
dans lequel le premier procédé de transformation correspond à un procédé à base de distance d'édition basé sur une distance mesurée entre le premier ensemble de primitives et le deuxième ensemble de primitives, dans lequel les étapes du procédé de distance d'édition comprennent :
la création d'une première matrice de paires de primitives à partir du spectre cible et du spectre de référence,
le calcul d'au moins trois distances avec une primitive mappée ou appariée sur le spectre de référence en partant de la gauche vers la droite et en commençant par une première primitive du spectre cible, l'une des opérations d'insertion, de suppression et de substitution étant sélectionnée pour calculer les au moins trois distances, et
la répétition des étapes de création et de calcul pour toutes les primitives appariées et la sommation du coût des opérations sélectionnées pour chaque transformation appariée afin d'obtenir un coût de transformation total ;
dans laquelle le deuxième procédé de transformation correspond à un procédé à base d'algorithme hongrois et basé sur la mesure de distance de dimension x et y entre le premier ensemble de primitives et le deuxième ensemble de primitives, les étapes du procédé à base d'algorithme hongrois comprenant :
la création d'une deuxième matrice de paires de primitives à partir du spectre cible et du spectre de référence,
le mappage ou la transformation d'une primitive du spectre cible en une autre primitive dans le spectre de référence, un coût étant associé à chaque transformation de primitives appariées, et
le calcul d'un coût de transformation pour chaque paire de primitives, le coût d'une transformation pour une paire étant : la différence scalaire pondérée de x et y ; et
dans lequel le troisième procédé de transformation correspond à un procédé de distance angulaire par morceaux basé sur la différence angulaire et la différence de longueur entre le premier ensemble de primitives et le deuxième ensemble de primitives, dans lequel les étapes du procédé de distance angulaire par morceaux comprennent :
le calcul d'une différence angulaire et d'une différence de longueur entre des arcs correspondants du spectre cible et du spectre de référence pour générer un score d'arc, le spectre cible et le spectre de référence étant représentés par des valeurs de longueur d'onde et de réflectance bidimensionnelles,
la répétition du calcul pour chaque arc correspondant dans le spectre cible et le spectre de référence, et
la sommation des scores d'arc correspondant à tous les arcs pour obtenir un score de correspondance final ;
l'obtention, via les un ou plusieurs processeurs matériels (102), d'un ensemble de transformations optimales du premier ensemble de primitives en le deuxième ensemble de primitives par optimisation de l'ensemble de transformations (206) ;
l'obtention, via un ou plusieurs processeurs matériels (102), un ensemble de coûts de transformation globaux en prenant la somme des coûts de transformation correspondant à chaque transformation optimale de l'ensemble de transformations optimales (208) ; et
l'obtention, via les un ou plusieurs processeurs matériels (102), d'un coût de transformation optimal en optimisant l'ensemble des coûts de transformation globaux au moyen d'une technique d'optimisation, le coût de transformation optimal représentant la correspondance spectrale optimale du spectre cible avec le spectre de référence (210).

2. Procédé (200) selon la revendication 1, dans lequel le spectre cible et le spectre de référence sont au moins l'un parmi un spectre hyperspectral ou un spectre multispectral.

3. Procédé (200) selon la revendication 1, dans lequel le coût de transformation correspond à l'une ou plusieurs parmi (i) la translation d'une primitive dans les dimensions x et y, (ii) la suppression de la primitive et (iii) l'insertion de la primitive.

4. Système (100), comprenant :
une mémoire (104) stockant des instructions ;
une ou plusieurs interfaces de communication (106) ; et
un ou plusieurs processeurs matériels (102) couplés à la mémoire (104) via les une ou plusieurs interfaces de communication (106), dans lequel les un ou plusieurs processeurs matériels (102) sont configurés par les instructions pour :
recevoir un spectre cible d'un objet cible pour effectuer un mappage de spectre optimal avec un spectre de référence, le spectre cible comprenant un premier ensemble de primitives et le spectre de référence comprenant un deuxième ensemble de primitives représentées dans un espace bidimensionnel, **caractérisé en ce que** le premier ensemble de primitives et le deuxième ensemble de primitives comprennent l'une parmi des courbes et un ensemble de points dans l'espace bidimensionnel, et l'axe x correspondant à la longueur d'onde et l'axe y correspondant à la réflectance dans l'espace bidimensionnel ;
transformer chaque primitive dans le premier ensemble de primitives du spectre cible en au moins une primitive dans le deuxième ensemble de primitives du spectre de référence en utilisant au moins un premier procédé de transformation, un deuxième procédé de transformation et un troisième procédé de transformation pour obtenir un ensemble de transformations, chaque transformation de l'ensemble de transformations entraînant un coût de transformation,
dans lequel le premier procédé de transformation correspond à un procédé à base de distance d'édition basé sur une distance mesurée entre le premier ensemble de primitives et le deuxième ensemble de primitives, dans lequel les étapes du procédé de distance d'édition comprennent :
la création d'une première matrice de paires de primitives à partir du spectre cible et du spectre de référence,
le calcul d'au moins trois distances avec une primitive mappée ou appariée sur le spectre de référence en partant de la gauche vers la droite et en commençant par une première primitive du spectre cible, l'une des opérations d'insertion, de suppression et de substitution étant sélectionnée pour calculer les au moins trois distances, et
la répétition des étapes de création et de calcul pour toutes les primitives appariées et la sommation du coût des opérations sélectionnées pour chaque transformation appariée afin d'obtenir un coût de transformation total ;
dans laquelle le deuxième procédé de transformation correspond à un procédé à base d'algorithme hongrois et basé sur la mesure de distance de dimension x et y entre le premier ensemble de primitives et le deuxième ensemble de primitives, les étapes du procédé à base d'algorithme hongrois comprenant :
la création d'une deuxième matrice de paires de primitives à partir du spectre cible et du spectre de référence,
le mappage ou la transformation d'une primitive du spectre cible en une autre primitive dans le spectre de référence, un coût étant associé à chaque transformation de primitives appariées, et
le calcul d'un coût de transformation pour chaque paire de primitives, le coût d'une transformation pour une paire étant : la différence scalaire pondérée de x et y ; et
dans lequel le troisième procédé de transformation correspond à un procédé de distance angulaire par morceaux basé sur la différence angulaire et la différence de longueur entre le premier ensemble de primitives et le deuxième ensemble de primitives, dans lequel les étapes du procédé de distance angulaire par morceaux comprennent :
le calcul d'une différence angulaire et d'une différence de longueur entre des arcs correspondants du spectre cible et du spectre de référence pour générer un score d'arc, le spectre cible et le spectre de référence étant représentés par des valeurs de longueur d'onde et de réflectance bidimensionnelles,
la répétition du calcul pour chaque arc correspondant dans le spectre cible et le spectre de référence, et
la sommation des scores d'arc correspondant à tous les arcs pour obtenir un score de correspondance final ;
l'obtention d'un ensemble de transformations optimales du premier ensemble de primitives en le deuxième ensemble de primitives par optimisation de l'ensemble de transformations ;
l'obtention d'un ensemble de coûts de transformation globaux en prenant la somme des coûts de transformation correspondant à chaque transformation optimale de l'ensemble de transformations optimales ; et
l'obtention d'un coût de transformation optimal en optimisant l'ensemble des coûts de transformation globaux au moyen d'une technique d'optimisation, le coût de transformation optimal représentant la correspondance spectrale optimale du spectre cible avec le spectre de référence.

5. Système (100) selon la revendication 4, dans lequel le spectre cible et le spectre de référence sont au moins l'un parmi un spectre hyperspectral ou un spectre multispectral.

6. Système (100) selon la revendication 4, dans lequel le coût de transformation correspond à l'une ou plusieurs parmi (i) la translation d'une primitive dans les dimensions x et y, (ii) la suppression de la primitive et (iii) l'insertion de la primitive.

7. Un ou plusieurs supports de stockage d'informations non transitoires lisibles par machine (104) comprenant une ou plusieurs instructions qui, lorsqu'elles sont exécutées par un ou plusieurs processeurs matériels (102), amènent le système (100) selon la revendication 4 à réaliser le procédé (200) selon les revendications 1 à 3.
